# DEMANDE DE BREVET EUROPEEN

(11) **EP 0 637 180 A1**
(43) Date de publication de la demande: **01.02.1995**
(21) Numéro de dépôt: 94401727.6
(22) Date de dépôt: 27.07.1994
(51) Int. Cl.: H04Q 7/30, H04Q 7/36, H04B 7/26

(54) **Système de radiocommunications cellulaire**

(30) Priorité: 30.07.1993 FR 9309424
(71) Demandeur: ALCATEL MOBILE COMMUNICATION FRANCE, 75008 Paris (FR); ALCATEL N.V., NL-1077 XX Amsterdam (NL)
(72) Inventeur: Dupuy, Pierre, F-75017 Paris (FR)
(74) Mandataire: Fournier, Michel

(57) **Abrégé**

Système de radiocommunications cellulaire comprenant des cellules subdivisées en P secteurs, chaque secteur ayant sa propre base de temps, la transmission de données dans ledit système suivant le principe de l'accès multiple à répartition dans le temps, de sorte qu'elle est effectuée par trains de données, ou bursts, chaque burst étant transmis pendant un intervalle de temps, appelé canal, de rang prédéterminé par rapport à une référence de la base de temps du secteur considéré, N intervalles de temps formant une trame qui se répète périodiquement, et pour chaque secteur, un canal, appelé canal de contrôle, étant réservé à la transmission de données dites de signalisation et de contrôle, un canal de contrôle distinct étant associé à chaque secteur,caractérisé en ce que la base de temps de chaque secteur est décalée d'un nombre prédéterminé d'intervalles de temps par rapport aux bases de temps des autres secteurs de la même cellule, et en ce que les décalages sont tels que les canaux de contrôle relatifs à chaque secteur sont véhiculés à des instants différents.

## Description

La présente invention concerne un système de radiocommunications cellulaire, et en particulier un système de type GSM (Global System for Mobile communications).

Un système de radiocommunications cellulaire de type GSM comporte une pluralité de stations de base réparties géographiquement. Chacune de ces stations de base est destinée à la couverture radio d'une zone géographique spécifique appelée cellule. Chaque station de base se trouve en général au centre de la cellule associée ; elle est désignée par l'abréviation BTS, pour Base Transceiver Station en anglais.

Ainsi, l'espace est subdivisé en cellules, et un mobile (comme par exemple un radiotéléphone) évoluant dans l'espace couvert par un tel réseau de stations de base peut toujours être rattaché à une cellule donnée, de sorte qu'il échange des données utiles (de parole le plus souvent) et des données de signalisation et de contrôle, sous forme de signaux radio, avec la station de base couvrant la cellule dans laquelle il se trouve.

Lorsque l'utilisateur d'un mobile souhaite établir une communication, c'est-à-dire émettre et recevoir des données de parole, avec l'utilisateur d'un autre mobile ou un utilisateur fixe, les données de parole sont échangées par l'intermédiaire de la station de base correspondante, qui est munie à cet effet d'au moins un émetteur et au moins un récepteur associés à au moins une antenne.

L'antenne de la BTS peut être omnidirectionnelle et émettre dans toutes les directions des signaux ayant une puissance élevée.

En revanche, on sait que les signaux reçus par une antenne omnidirectionnelle et donc peu directive sont de moins bonne qualité que ceux reçus par une antenne très directive. Ainsi, pour que les signaux émis par les mobiles soient exploitables par la BTS munie d'une antenne omnidirectionnelle, leur puissance d'émission au départ des mobiles doit être élevée.

Or, la puissance d'émission des mobiles est limitée, afin notamment d'augmenter leur autonomie, de sorte que lorsqu'ils sont trop éloignés du centre de la cellule, la réception au niveau de la BTS est mauvaise si l'antenne est omnidirectionnelle, le signal ayant alors un niveau trop faible pour être distingué des interférences ou du bruit.

Une méthode pour pallier cet inconvénient consiste à subdiviser les cellules, surtout celles dites de grande couverture (c'est-à-dire ayant un rayon de l'ordre de plusieurs kilomètres), en une pluralité de cellules élémentaires, appelées secteurs, disposées en général en faisceau autour de la BTS de la cellule initiale, appelée cellule principale. Ainsi, une cellule peut être divisée en trois, six ou douze secteurs par exemple, selon sa taille, le trafic de communications prévu dans la zone qu'elle couvre et la puissance des mobiles qu'elle doit pouvoir recevoir.

Chacun des secteurs est alors muni d'une antenne directive. Par abus de langage, on continuera d'appeler l'ensemble constitué par tous les secteurs une cellule, bien que chaque secteur constitue une cellule indépendante dans le sens défini plus haut.

Deux types principaux de données, du genre de celles échangées sur le réseau RNIS (Réseau Numérique à Intégration de Services), peuvent être échangés entre un mobile et la station de base de la cellule dans laquelle il se trouve :
- des données dites utiles, c'est-à-dire de la voix (données de parole) ou des données informatiques,
- des données dites de signalisation et de contrôle, qui contiennent notamment des informations permettant au mobile de se connecter au réseau cellulaire (cette connexion est couramment appelée "Accès"), ou bien de maintenir une communication en cours alors qu'il change de cellule (ce changement est couramment appelé "Handover" dans la terminologie GSM).

Ainsi, à chaque cellule principale est associé un jeu de fréquences comprenant au moins une paire de fréquences constituée :
- d'une fréquence pour la transmission dans le sens descendant (c'est-à-dire dans le sens station de base vers mobile) des données de signalisation et de contrôle sur un canal dénommé BCCH (pour Broadcast Control Channel) dans la terminologie GSM, et des données utiles,
- d'une fréquence pour la transmission dans le sens montant (c'est-à-dire dans le sens mobile vers station de base) des données de signalisation et de contrôle et des données utiles, associée à la fréquence descendante.

Selon la capacité que l'on souhaite conférer à la cellule, c'est-à-dire selon le trafic de communications envisagé dans la cellule, une ou plusieurs fréquences supplémentaires, toutes distinctes les unes des autres et de la fréquence prévue au départ, sont affectées à la cellule pour subvenir aux besoins du trafic, c'est-à-dire pour la transmission des données utiles. Bien entendu, chaque fois qu'une fréquence supplémentaire est utilisée dans le sens descendant, une fréquence associée est prévue pour la transmission dans le sens montant.

Les fréquences montante et descendante sont toujours distinctes l'une de l'autre.

Dans le cas des cellules sectorisées, en général, une seule fréquence est utilisée, et chaque secteur est muni d'un émetteur, d'un récepteur et d'une antenne.

Par suite de l'application dans les systèmes de radiocommunications cellulaires de type GSM du principe d'Accès Multiple à Répartition dans le Temps (AMRT, ou TDMA en anglais pour Time Division Multiple Access), lorsqu'un mobile se connecte au réseau cellulaire, un canal de trafic TCH (pour Traffic CHannel) lui est affecté pour la transmission de données utiles, ce canal de trafic correspondant à un intervalle de temps d'émission répété périodiquement et réservé au mobile pendant la durée de la communication, c'est-à-dire la durée des échanges de données utiles, sur la fréquence montante. Un canal de trafic correspondant lui est affecté de la même manière pour la réception sur la fréquence descendante. Le canal de trafic montant est décalé dans le temps par rapport au canal de trafic descendant.

En pratique, dans la configuration la plus simple, les canaux véhiculés par une fréquence forment des groupes de huit appelés trames, de sorte qu'un canal donné se répète tous les huit intervalles de temps. L'un de ces canaux, dit canal de contrôle, est réservé à la transmission de données de signalisation et de contrôle. Sa période de répétition est supérieure à la période de répétition des canaux de trafic qui est de huit intervalles de temps. Ainsi, les intervalles de temps réservés au canal de contrôle et qui ne sont pas utilisés pour la signalisation et le contrôle sont également disponibles pour assurer le trafic.

Dans les zones rurales, où les cellules sont en général de grande couverture, de sorte qu'elles sont sectorisées, de nombreux canaux de trafic sont donc disponibles (en général 7 par secteur, soit 14 ou 21 pour des cellules à respectivement 2 ou 3 secteurs), et très peu sont utilisés en pratique du fait de la faible densité de communications. Or, la mise à disposition d'un grand nombre de canaux de trafic impose à chaque secteur d'être muni d'un émetteur et d'un récepteur, ainsi que de tous les équipements associés nécessaires.

Par conséquent, le coût en équipements est élevé pour une faible utilisation des disponibilités, de sorte que la rentabilité d'un tel système est médiocre.

La demande de brevet EP-0 359 535 décrit un système de radiocommunications cellulaire dans lequel sont utilisés des canaux "flottants" pouvant être alloués dynamiquement à un secteur ou à un autre en cas de surcharge des canaux normalement disponibles. Ce système ne permet pas de réduire le coût en équipements d'une cellule sectorisée, puisqu'il nécessite un émetteur-récepteur par secteur, ainsi qu'au moins un émetteur-récepteur "flottant" pour mettre à disposition les canaux "flottants" par l'intermédiaire d'une fréquence supplémentaire allouée au secteur en surcharge.

On connaît par ailleurs une demande de brevet WO 91/01073, dans laquelle est divulgué un système de radiocommunications cellulaire utilisant l'accès multiple à répartition dans le temps et dans lequel les différents secteurs d'une cellule sectorisée sont regroupés par groupes de deux, deux secteurs ainsi regroupés partageant les intervalles de temps disponibles sur la ou les fréquences qui leur sont allouées, en fonction de la demande, c'est-à-dire du trafic de communications dans chaque secteur. On dit alors que les intervalles de temps sont alloués dynamiquement entre les secteurs d'un même groupe.

Le problème posé par un tel système réside dans le fait que, dans le sens descendant, le canal de contrôle destiné à chaque secteur d'un groupe de deux est soit identique pour les deux secteurs, soit émis en même temps pour chacun des deux secteurs, de sorte qu'il y a alors brouillage du canal de contrôle d'un secteur par le canal de contrôle de l'autre, ce qui rend ce canal inutilisable. De même, lorsque les mobiles situés dans l'un ou l'autre des secteurs d'un même groupe de deux émettent sur le canal de contrôle montant des signaux d'accès, ces signaux sont envoyés en même temps de sorte qu'ils sont également brouillés.

En outre, dans le système proposé dans ce document, un récepteur est nécessaire par secteur, de sorte que le coût en équipements d'un tel système est encore élevé.

On connaît enfin la demande de brevet EP-0 444 485 qui propose, pour diminuer le coût en équipements dans un système à cellules synchronisées, de réduire le nombre de transcodeurs utilisés, et pour cela de décaler d'un nombre entier de trames les bases de temps de chaque cellule synchronisée les unes par rapport aux autres. Ainsi, étant donné que la durée d'une trame correspond sensiblement au temps nécessaire au transcodeur pour effectuer le traitement de la parole, un tel système permet de n'utiliser qu'un seul transcodeur pour plusieurs cellules synchronisées.

Toutefois, ce système ne permet pas de réduire le nombre de récepteurs utilisés dans une cellule sectorisée, de sorte que le coût en équipements d'un tel système reste encore élevé. En effet, puisqu'un décalage d'un nombre entier de trames est effectué, il y aurait superposition, au sein des différents secteurs, des canaux de même rang, de sorte qu'un émetteur et un récepteur par secteur seraient nécessaires pour éviter une perte d'informations.

Le but de la présente invention est de réaliser un système de radiocommunications cellulaire permettant de diminuer le coût en équipements des stations de base, tout en assurant une disponibilité de canaux de trafic suffisante pour couvrir le trafic de communications dans une cellule sectorisée et en évitant une superposition des canaux de contrôle risquant de rendre les informations contenues dans ces derniers inutilisables.

La présente invention propose à cet effet un système de radiocommunications cellulaire comprenant des cellules subdivisées en P secteurs, chaque secteur ayant sa propre base de temps, la transmission de données dans ledit système suivant le principe de l'accès multiple à répartition dans le temps, de sorte qu'elle est effectuée par trains de données, ou bursts, chaque burst étant transmis pendant un intervalle de temps, appelé canal, de rang prédéterminé par rapport à une référence de la base de temps du secteur considéré, N intervalles de temps formant une trame qui se répète périodiquement, et pour chaque secteur, un canal, appelé canal de contrôle, étant réservé à la transmission de données dites de signalisation et de contrôle, un canal de contrôle distinct étant associé à chaque secteur, caractérisé en ce que la base de temps de chaque secteur est décalée d'un nombre prédéterminé d'intervalles de temps par rapport aux bases de temps des autres secteurs de la même cellule, et en ce que les décalages sont tels que les canaux de contrôle relatifs à chaque secteur sont véhiculés à des instants différents.

Grâce à un tel décalage entre les bases de temps des différents secteurs, il est possible notamment de décaler les instants de réception ou d'émission dans le temps des données de signalisation et de contrôle. Ainsi, la même unité de bande de base peut gérer l'émission et la réception de ces données, qui ne se produisent pas au même instant pour les différents secteurs. Il est donc possible par exemple de n'utiliser qu'un seul récepteur : les bases de temps étant décalées dans le temps, les données de signalisation ou de contrôle émises par les mobiles (constituant le Random Access CHannel, ou RACH, émis par un mobile souhaitant établir sa connexion avec un secteur déterminé) se trouvant au sein de secteurs différents sont ainsi reçues à des instants différents sans risque de collision et de perte d'informations.

Selon la configuration la plus simple, une seule unité de bande de base (ou dispositif de bande de base) avec des trames de huit intervalles de temps peut donc servir à assurer tout le trafic de la cellule sectorisée. Dans ce cas, si par exemple le nombre de secteurs dans la cellule sectorisée est de trois, trois intervalles de temps de la trame à l'émission sont réservés à la transmission des données de contrôle et de signalisation, et les autres intervalles de temps servent à assurer le trafic de toute la cellule sectorisée.

Par conséquent, du fait du décalage entre les bases de temps des secteurs, on peut diminuer le coût en équipements car les secteurs peuvent ne pas utiliser les mêmes intervalles de temps en même temps.

De manière très avantageuse dans le système de radiocommunications cellulaire selon l'invention, P est strictement inférieur à N, en ce que P intervalles de temps parmi les N intervalles de temps de chaque trame, sont réservés aux canaux de contrôle, et en ce qu'une partie des N-P canaux restants, dits canaux de trafic, est associée aux différents secteurs soit de manière préétablie et permanente, soit de manière dynamique en fonction de la demande, c'est-à-dire du trafic de communications.

Selon un premier mode de réalisation de la présente invention, le système selon l'invention comprend, en association avec chaque cellule sectorisée et pour assurer les échanges de données avec les mobiles évoluant dans cette cellule, une station de base comportant :
- P antennes, une pour chaque secteur,
- un récepteur destiné à être commuté, à chaque intervalle de temps, à l'aide de moyens de commutation (par exemple un commutateur analogique) contrôlés par des moyens de contrôle de ladite station de base, lesdits moyens de contrôle connaissant l'association des canaux de trafic aux secteurs sur l'antenne du secteur auquel est associé le canal de trafic ou de contrôle correspondant à l'intervalle de temps considéré, pour recevoir les données en provenance d'un mobile se trouvant dans ce secteur,
- P émetteurs, un pour chaque secteur, émettant d'une part, lorsqu'il y en a, les données à transmettre aux mobiles se trouvant dans les secteurs auxquels ils sont associés, et d'autre part des bursts dits de remplissage, ou dummy bursts, lorsqu'aucune donnée n'est à transmettre.

La station de base comporte en outre un dispositif unique de traitement en bande de base à l'émission, ce dispositif étant raccordé à l'un quelconque desdits émetteurs à l'aide de moyens de commutation (par exemple un commutateur numérique) contrôlés par les moyens de contrôle de ladite station de base, ces derniers connaissant l'association des canaux de trafic aux secteurs.

Ainsi, une chaîne de réception unique, avec un seul récepteur, peut être utilisée, ce qui réduit de manière non négligeable le coût en équipements. Il est toutefois nécessaire de conserver un émetteur par secteur, car, de manière bien connue, dans le système GSM notamment, le canal de signalisation et de contrôle dans le sens descendant doit être émis en permanence pour permettre de réaliser, entre autres, la procédure d'accès ou la procédure de handover. Toutefois, un seul dispositif bande de base est nécessaire pour gérer la bande de base à l'émission des données utiles.

Selon un deuxième mode de mise en oeuvre de la présente invention, le système de radiocommunications selon l'invention comprend, en association avec chaque cellule sectorisée et pour assurer les échanges de données avec les mobiles évoluant dans cette cellule, une station de base comportant :
- P antennes, une pour chaque secteur,
- P récepteurs, un pour chaque secteur, pour recevoir les données en provenance d'un mobile se trouvant dans ce secteur,
- P émetteurs, un pour chaque secteur, émettant d'une part, lorsqu'il y en a, les données à transmettre aux mobiles se trouvant dans les secteurs auxquels ils sont associés, et d'autre part des bursts dits de remplissage, ou dummy bursts, lorsqu'aucune donnée n'est à transmettre,
- un dispositif unique de traitement en bande de base à l'émission, ce dispositif étant raccordé à l'un quelconque desdits émetteurs à l'aide de premiers moyens de commutation contrôlés par des moyens de contrôle de ladite station de base, lesdits moyens de contrôle connaissant l'association des canaux de trafic aux secteurs,
- un dispositif unique de traitement en bande de base à la réception, ce dispositif étant raccordé à l'un quelconque desdits récepteurs à l'aide de deuxièmes moyens de commutation contrôlés par lesdits moyens de contrôle.

Les premiers et deuxièmes moyens de commutation peuvent comprendre chacun un commutateur numérique.

Dans ce mode de réalisation, la diminution du coût en équipements provient du fait qu'un seul dispositif bande de base pour l'émission, et un seul dispositif bande de base pour la réception sont nécessaires puisque chaque intervalle de temps n'est utilisé que dans un seul secteur à la fois.

D'autres caractéristiques et avantages de la présente invention apparaîtront dans la description suivante d'un système selon l'invention, donnée à titre illustratif et nullement limitatif.

Dans les figures suivantes :
- la figure 1 représente schématiquement un exemple d'organisation des cellules sectorisées d'un réseau de radiocommunications cellulaire,
- la figure 2 représente de manière schématique une trame caractéristique d'un système selon l'invention,
- la figure 3 est un schéma synoptique d'un premier mode de réalisation de l'invention,
- la figure 4 est un schéma synoptique d'un deuxième mode de réalisation de l'invention.

Dans toutes ces figures, les éléments communs portent les mêmes numéros de référence.

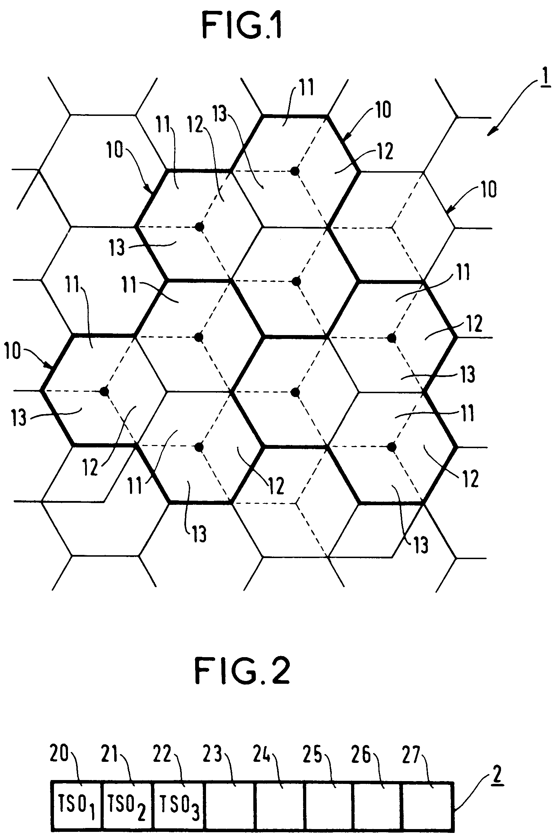

On a représenté en figure 1 une portion d'un réseau de radiocommunications cellulaire 1 représenté schématiquement sous la forme de la répétition d'un motif de trois cellules 10 (les contours de chaque motif sont représentés en trait épais sur la figure 1). Chaque cellule 10 est subdivisée en trois secteurs 11, 12 et 13 (les séparations entre les secteurs d'une même cellule sont représentées en trait interrompu sur la figure 1).

Classiquement, au moins une fréquence porteuse est affectée à chaque secteur 11, 12 ou 13, le choix de la répartition des fréquences porteuses en fonction de la disposition des secteurs et des cellules étant effectué de sorte que les interférences soient réduites au minimum. Ceci conduit à choisir des motifs de répétition prédéterminés.

Chaque secteur est muni d'un dispositif d'émission et de réception (non représentée sur la figure 1) ayant sa propre base de temps. Dans un système de radiocommunications utilisant le principe de l'Accès Multiple à Répartition dans le Temps, et compte tenu des explications fournies précédemment, il est en effet bien évident que chaque station de base doit posséder une référence temporelle lui permettant d'assurer la synchronisation nécessaire avec les mobiles dont elle a la charge, afin que ces derniers émettent bien des signaux dans les intervalles de temps qui leur sont réservés.

Dans la suite, on conviendra d'appeler l'ensemble constitué par les dispositifs d'émission et de réception des trois secteurs 11, 12 et 13 d'une cellule 10 station de base de la cellule 10.

La figure 2 représente une configuration simple de trame 2 selon l'invention, associée à l'une des cellules 10. Cette trame 2 est représentée schématiquement sous la forme d'une suite de huit cases référencées 20 à 27, chaque case symbolisant un intervalle de temps.

Selon l'invention, les bases de temps de chaque dispositif d'émission et de réception sont décalées dans le temps de sorte que, notamment, les canaux de contrôle relatifs à chaque secteur sont véhiculés à des instants différents, et donc qu'aucune collision entre eux n'est possible.

De manière habituelle, le canal de contrôle correspond au premier intervalle de temps de la trame, numéroté 0 et dénommé TS0 pour Time Slot 0 en anglais.

On comprend donc que, d'après l'invention, et comme cela est visible en figure 2, le TS0 de chaque secteur 11, 12 ou 13 ne correspond pas nécessairement au premier intervalle de temps de la trame 2.

Dans l'exemple représenté en figure 2, la base de temps du secteur 12 est décalée d'un intervalle de temps par rapport à la base de temps du secteur 11, et la base de temps du secteur 13 est décalée d'un intervalle de temps par rapport à la base de temps du secteur 12 et de deux intervalles de temps par rapport à la base de temps du secteur 11. Ainsi, les TS0 de chaque secteur, référencés respectivement TS0₁, TS0₂ et TS0₃, correspondent respectivement aux premier, deuxième et troisième intervalles de temps 20, 21 et 22 de la trame 2.

Les autres intervalles de temps 23 à 27 de la trame 2 sont réservés aux canaux de trafic dans la cellule 10.

On peut envisager plusieurs solutions pour l'allocation de ces intervalles de temps aux différents secteurs.

Selon une première solution, chaque intervalle de temps restant est alloué de manière permanente à un secteur donné. Par exemple, on décide que les intervalles de temps 23 et 24 sont alloués au secteur 11, que les intervalles de temps 25 et 26 sont alloués au secteur 12, et que l'intervalle de temps 27 est alloué au secteur 13. Les décisions d'allocation peuvent par exemple être prises en fonction de données statistiques concernant le trafic de communications dans chacun des secteurs 11, 12 ou 13.

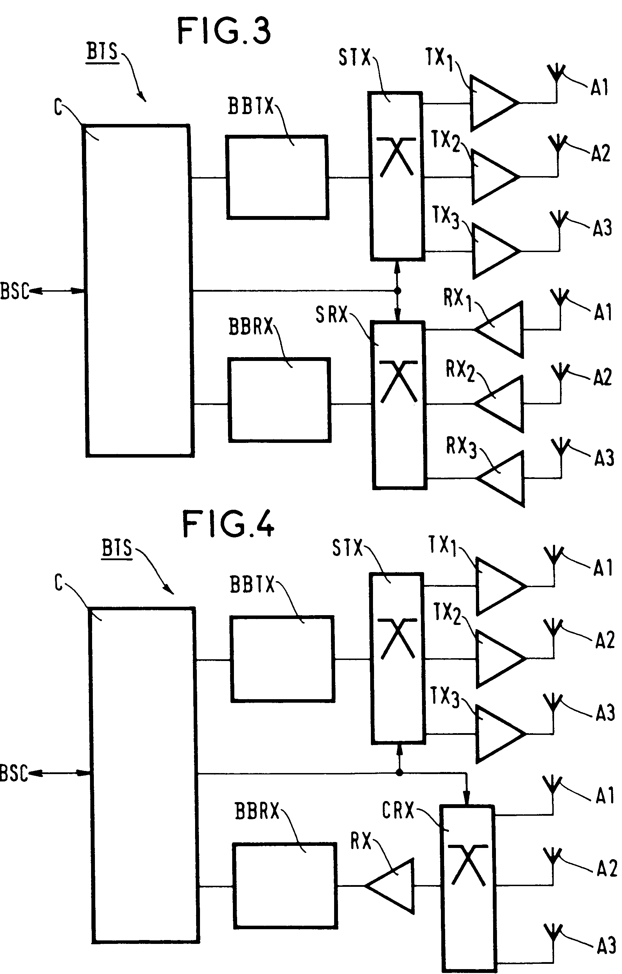

Selon une deuxième solution, une partie des intervalles de temps restants peut être allouée de manière permanente à un ou plusieurs secteurs donnés, et les autres intervalles de temps sont alloués de manière "dynamique" en fonction de la demande, c'est-à-dire du trafic de communications dans la cellule. Par exemple, les intervalles de temps 23, 24 et 25 sont alloués en permanence aux secteurs 11, 12 et 13 respectivement, et les intervalles de temps 26 et 27 restent disponibles à la demande, en fonction du trafic de communications dans la cellule. On verra plus loin, en relation avec les figures 3 et 4, comment une telle solution peut être mise en oeuvre.

Selon une troisième solution, tous les intervalles de temps restants sont alloués dynamiquement en fonction de la demande dans chaque secteur. On verra également plus loin comment cette solution peut être mise en oeuvre.

On voit en figure 3 un diagramme synoptique d'un premier mode de réalisation de la station de base BTS d'une cellule 10 du système de radiocommunications cellulaire 1 selon l'invention.

La station de base BTS comporte :
- trois antennes A₁, A₂ et A₃ pour l'émission et la réception de signaux radio haute fréquence à destination ou en provenance respectivement des secteurs 11, 12 et 13 de la cellule 10,
- trois émetteurs TX₁, TX₂ et TX₃ dont les sorties respectives sont reliées aux antennes A₁, A₂ et A₃,
- un commutateur numérique STX auquel sont reliées les entrées des trois émetteurs TX₁, TX₂ et TX₃,
- un dispositif unique BBTX de traitement en bande de base à l'émission, relié au commutateur STX d'une part, et à un dispositif de contrôle C de la BTS, capable de gérer, sous la commande d'un contrôleur de station de base BSC ayant en charge la station de base BTS, l'allocation des différents intervalles de temps disponibles,
- trois récepteurs RX₁, RX₂ et RX₃ dont les sorties respectives sont reliées aux antennes A₁, A₂ et A₃,
- un commutateur numérique SRX auquel sont reliées les entrées des trois récepteurs RX₁, RX₂ et RX₃,
- un dispositif unique BBRX de traitement en bande de base à la réception, relié au commutateur SRX d'une part, et au dispositif de contrôle C d'autre part.

Les commutateurs STX et SRX peuvent également être des commutateurs analogiques.

Selon l'invention, le dispositif de contrôle C connaît les affectations des différents intervalles de temps. Il sait ainsi à quels secteurs doivent être alloués en permanence les trois premiers intervalles de temps 20, 21 et 22 réservés au canal de contrôle. Il connaît en outre, s'il y a lieu, l'affectation des intervalles de temps destinés aux canaux de trafic et alloués de manière permanente à des secteurs donnés. Enfin, en fonction du trafic de communications, géré par le BSC, il est capable d'allouer les intervalles de temps "flottants" éventuels aux secteurs dans lesquels une telle allocation est nécessaire. Ainsi, le dispositif C contrôle les commutateurs STX et SRX de manière à ce que, à chaque intervalle de temps, l'émetteur et le récepteur convenables soient activés.

Grâce au décalage entre les bases de temps des différents secteurs, un intervalle de temps de rang donné ne peut être utilisé en même temps par deux secteurs différents. L'effet premier d'une telle disposition est d'éviter l'émission simultanée de données de signalisation et de contrôle ; par voie de conséquence, le décalage entre les bases de temps permet d'éviter la réception simultanée, sur un même intervalle de temps, de données de signalisation et de contrôle en provenance de mobiles différents.

La conséquence de cette disposition est une réduction dans le coût des équipements nécessaires au niveau de la station de base de la cellule 10. En effet, comme on le comprend aisément d'après la figure 3, un seul dispositif de traitement en bande de base est nécessaire à l'émission, et un seul à la réception.

On a représenté en figure 4 un schéma synoptique d'un second mode de réalisation d'une station de base d'un réseau selon l'invention.

La différence entre ce deuxième mode de réalisation et le premier décrit en relation avec la figure 3 réside dans la partie réception de la BTS, la partie émission restant inchangée. Ainsi qu'on le voit en figure 4, au lieu d'utiliser trois récepteurs RX₁, RX₂, RX₃, on n'utilise plus qu'un seul récepteur RX, dont l'entrée est reliée à un commutateur analogique CRX, lui-même relié aux antennes A₁, A₂ et A₃ et commandé par le dispositif de contrôle C. Puisqu'un même intervalle de temps n'est pas utilisé en même temps par deux secteurs distincts, chaque récepteur est inutilisé pendant au moins un intervalle de temps. Il est donc inutile d'employer trois récepteurs distincts, et un récepteur unique commuté à chaque intervalle de temps sur l'antenne adéquate est suffisant.

Une telle simplification n'est pas possible au niveau de l'émission. En effet, comme on l'a rappelé plus haut, la BTS doit émettre en permanence un signal sur le canal de signalisation et de contrôle de chaque secteur. Or on a vu également que la période séparant deux répétitions de ce canal est supérieure à celle séparant deux répétitions d'un même canal de trafic. De ce fait, des intervalles de temps de rang réservé au canal de contrôle peuvent être inutilisés pendant une durée plus ou moins importante. On utilise alors les intervalles de temps de rang réservé au canal de contrôle et non utilisés par ce dernier pour créer de nouveaux canaux de trafic.

Il se peut que tous les intervalles de temps de rang réservé au canal de contrôle soient en permanence utilisés pour les canaux de trafic à l'émission. Toutefois, cette situation est peu probable en pratique, surtout dans des cellules telles que celles considérées ici, qui sont des cellules de grande couverture et de très faible trafic. Il se peut donc que des intervalles de temps de rang réservé au canal de contrôle soient inutilisés.

Ceci pose un problème majeur : dans les procédures d'accès et de handover, il est indispensable que le mobile puisse déterminer la fréquence sur laquelle est transmis le canal de contrôle BCCH. Pour cela, il doit "écouter" toutes les fréquences des cellules voisines de celles dans laquelle il se trouve, et par exemple les classer par ordre décroissant en fonction du niveau de réception, en retenant celle de niveau le plus élevé comme étant celle de la cellule d'accès ou de handover. On comprend donc bien qu'il est nécessaire qu'un signal soit en permanence émis sur la fréquence du BCCH. Ainsi, des bursts de remplissage, ou "dummy bursts", dont le contenu est choisi pour être très différent du contenu des bursts normaux, sont émis sur la fréquence du BCCH dans les intervalles de temps inutilisés.

On comprend donc bien pourquoi il est nécessaire de conserver les trois émetteurs TX₁, TX₂ et TX₃ : ces derniers sont indispensables pour l'émission des dummy bursts.

Le mode de mise en oeuvre de la figure 4 présente par ailleurs les mêmes avantages que celui décrit en relation avec la figure 3.

Pour ce qui est des procédures d'accès ou de handover dans un système de radiocommunications cellulaire selon l'invention, on comprend bien que ces dernières peuvent être effectuées de la même manière que dans un système de l'art antérieur.

Bien entendu, l'invention n'est pas limitée au mode de réalisation qui vient d'être décrit.

En particulier, selon les besoins du trafic, une ou plusieurs fréquences peuvent être affectées à chaque secteur. Dans ce cas, un émetteur/récepteur par fréquence est nécessaire. Il est également possible que le système selon l'invention utilise le principe du saut de fréquence (frequency hopping en anglais) ; dans ce cas, la fréquence utilisée à chaque intervalle de temps change selon un plan prédéterminé. Seule la fréquence du BCCH est toujours la même.

Par ailleurs, l'invention peut être utilisée dans tout système de radiocommunications cellulaire, qu'il soit ou non du type GSM.

Enfin, on pourra remplacer tout moyen par un moyen équivalent sans sortir du cadre de l'invention.

## Revendications

**1/** Système de radiocommunications cellulaire comprenant des cellules subdivisées en P secteurs, chaque secteur ayant sa propre base de temps, la transmission de données dans ledit système suivant le principe de l'accès multiple à répartition dans le temps, de sorte qu'elle est effectuée par trains de données, ou bursts, chaque burst étant transmis pendant un intervalle de temps, appelé canal, de rang prédéterminé par rapport à une référence de la base de temps du secteur considéré, N intervalles de temps formant une trame qui se répète périodiquement, et pour chaque secteur, un canal, appelé canal de contrôle, étant réservé à la transmission de données dites de signalisation et de contrôle, un canal de contrôle distinct étant associé à chaque secteur,
caractérisé en ce que la base de temps de chaque secteur est décalée d'un nombre prédéterminé d'intervalles de temps par rapport aux bases de temps des autres secteurs de la même cellule, et en ce que les décalages sont tels que les canaux de contrôle relatifs à chaque secteur sont véhiculés à des instants différents.

**2/** Système selon la revendication 1 caractérisé en ce que P est strictement inférieur à N, en ce que P intervalles de temps parmi les N intervalles de temps de chaque trame, sont réservés aux canaux de contrôle, et en ce qu'une partie des N-P canaux restants, dits canaux de trafic, est associée aux différents secteurs soit de manière préétablie et permanente, soit de manière dynamique en fonction de la demande, c'est-à-dire du trafic de communications.

**3/** Système selon l'une des revendications 1 ou 2 caractérisé en ce qu'il comprend en outre, en association avec chaque cellule sectorisée et pour assurer les échanges de données avec les mobiles évoluant dans cette cellule, une station de base (BTS) comportant :
- P antennes (A₁, A₂, A₃), une pour chaque secteur,
- un récepteur (RX) destiné à être commuté, à chaque intervalle de temps, à l'aide de moyens de commutation (CRX) contrôlés par des moyens de contrôle (C) de ladite station de base (BTS), lesdits moyens de contrôle (C) connaissant l'association des canaux de trafic aux secteurs sur l'antenne du secteur auquel est associé le canal de trafic ou de contrôle correspondant à l'intervalle de temps considéré, pour recevoir les données en provenance d'un mobile se trouvant dans ce secteur,
- P émetteurs (TX₁, TX₂, TX₃), un pour chaque secteur, émettant d'une part, lorsqu'il y en a, les données à transmettre aux mobiles se trouvant dans les secteurs auxquels ils sont associés, et d'autre part des bursts dits de remplissage, ou dummy bursts, lorsqu'aucune donnée n'est à transmettre.

**4/** Système selon la revendication 3 caractérisé en ce que lesdits moyens de commutation (CRX) comprennent un commutateur analogique.

**5/** Système selon l'une des revendications 3 ou 4 caractérisé en ce que ladite station de base (BTS) comporte un dispositif unique de traitement en bande de base à l'émission (BBTX), ce dispositif étant raccordé à l'un quelconque desdits émetteurs (TX₁, TX₂, TX₃) à l'aide de moyens de commutation (STX) contrôlés par lesdits moyens de contrôle (C), lesdits moyens de contrôle (C) connaissant l'association des canaux de trafic aux secteurs.

**6/** Système selon la revendication 5 caractérisé en ce que lesdits moyens de commutation (STX) comprennent un commutateur numérique.

**7/** Système selon l'une des revendications 1 ou 2 caractérisé en ce qu'il comprend en outre, en association avec chaque cellule sectorisée et pour assurer les échanges de données avec les mobiles évoluant dans cette cellule, une station de base (BTS) comportant :
- P antennes (A₁, A₂, A₃), une pour chaque secteur,
- P récepteurs (RX₁, RX₂, RX₃), un pour chaque secteur, pour recevoir les données en provenance d'un mobile se trouvant dans ce secteur,
- P émetteurs (TX₁, TX₂, TX₃), un pour chaque secteur, émettant d'une part, lorsqu'il y en a, les données à transmettre aux mobiles se trouvant dans les secteurs auxquels ils sont associés, et d'autre part des bursts dits de remplissage, ou dummy bursts, lorsqu'aucune donnée n'est à transmettre,
- un dispositif unique de traitement en bande de base à l'émission (BBTX), ce dispositif étant raccordé à l'un quelconque desdits émetteurs (TX₁, TX₂, TX₃) à l'aide de premiers moyens de commutation (STX) contrôlés par des moyens de contrôle (C) de ladite station de base (BTS), lesdits moyens de contrôle (C) connaissant l'association des canaux de trafic aux secteurs,
- un dispositif unique de traitement en bande de base à la réception (BBRX), ce dispositif étant raccordé à l'un quelconque desdits récepteurs (RX₁, RX₂, RX₃) à l'aide de deuxièmes moyens de commutation (SRX) contrôlés par lesdits moyens de contrôle.

**8/** Système selon la revendication 7 caractérisé en ce que lesdits premiers (STX) et deuxièmes (SRX) moyens de commutation comprennent chacun un commutateur numérique.
